# EUROPEAN PATENT APPLICATION

(11) **EP 4 052 613 A1**
(43) Date of publication of application: **07.09.2022**
(21) Application number: 21160002.8
(22) Date of filing: 01.03.2021
(51) Int. Cl.: A47B 47/04, F16B 12/24, A47B 96/20

(54) **MECHANICAL CONNECTION ARRANGEMENT FOR PANELS**

(71) Applicant: Välinge Innovation AB, 263 64 Viken (SE)
(72) Inventor: SVENSSON, Johan, 254 70 Kattarp (SE); DERELÖV, Peter, 252 84 Helsingborg (SE)
(74) Representative: Välinge Innovation AB

(57) **Abstract**

A mechanical connection arrangement for panels (1, 2), comprises a first panel (1), a second panel (2) and a mechanical locking device for locking the first panel (1) to the second panel (2). A surface of the first panel (1) and a surface of the second panel (2) are parallel and in contact in a locked position of the first and second panels (1, 2). The mechanical locking device comprises at least one rod-shaped element (3) at said surface of the first panel (1) and at least one corresponding insertion recess (4) at said surface of the second panel (2). The rod-shaped element (3) is configured to be inserted in the insertion recess (4). The lateral surface of the rod-shaped element (3) extends at a first angle (α) from the surface of the first panel (1) and the lateral side of the insertion recess (4) extends into the second panel (2) at a second angle (β) from the surface of the second panel (2). The difference between the first angle (α) and the second angle (β) is between 0,5 and 3 degrees.

## Description

### Field of the Invention

The present invention concerns a mechanical connection arrangement for panels and a method for connecting panels using the mechanical connection arrangement. The arrangement comprises a first panel, a second panel and a mechanical locking device for locking the first panel to the second panel. A surface of the first panel and a surface of the second panel are parallel and in contact in a locked position of the first and second panels. The mechanical locking device comprises at least one rod-shaped element at said surface of the first panel and at least one corresponding insertion recess at said surface of the second panel. The rod-shaped element is configured to be inserted in the insertion recess. The rod-shaped element extends at a first angle from the surface of the first panel. The insertion recess extends into the second panel at a second angle from the surface of the second panel.

### Background

Assembling two or more objects into one piece, for instance furniture, has historically required tools such as drills, screwdrivers, hammers, and wrenches.

Starting with click floors, assembling not requiring tools has further been developed and more or less all types of furniture in a household could be assembled without tools or at least with a minimum of tools.

WO 2020/046193 discloses a set including a first panel, a second panel and a mechanical locking device for locking the first panel to the second panel. The first panel includes a first edge surface and the second panel includes a second panel surfaced. The mechanical locking device includes at least one rod-shaped element that extends at a first angle from the first edge surface. An insertion groove extends into the second panel surface at a second angle from the second panel surface. The mechanical locking device further includes at least one locking groove and at least one locking part. The locking groove includes at least one locking surface extending at a third angled from the first edge surface or from the second panel surface. The locking part is configured to be inserted into the locking groove and lock against the locking surface. The third angle is different than the first angle.

WO 2020/046194 discloses a set including a first panel, a second panel and a mechanical locking device for locking the first panel to the second panel. The first panel includes a first edge surface and the second panel includes a second panel surface. The mechanical locking device includes at least one rod-shaped element at the first edge surface and at least one insertion groove at the second panel surface. The rod-shaped element is configured to be inserted into the insertion groove. Said set is also comprising a back panel configured to be inserted in and to cooperate with at least one of the first and second panel grooves and at least one locking gear configured to cooperate with the back panel and the first and/or second panel groove, for locking of the first panel to the second panel.

### Summary

Accordingly, embodiments of the present disclosure preferably seek to further provide alternative mounting solutions that require a minimum of tools and that facilitates having a tight fit between two panels by providing a mechanical connection arrangement and a method of connecting to panels with such a mechanical connection arrangement according to the appended patent claims.

According to one aspect of the present disclosure, a mechanical connection arrangement for panels comprises a first panel, a second panel and a mechanical locking device for locking the first panel to the second panel. A surface of the first panel and a surface of the second panel are parallel and in contact in a locked position of the first and second panels. The mechanical locking device comprises at least one rod-shaped element at said surface of the first panel and at least one corresponding insertion recess at said surface of the second panel. The rod-shaped element is configured to be inserted in the insertion recess. The lateral side of the rod-shaped element extends at a first angle from the surface of the first panel and the lateral side of the insertion recess extends into the second panel at a second angle from the surface of the second panel. The difference between the first angle and the second angle is between 0,5 and 3 degrees.

In the context of this disclosure, a panel is a flat piece of construction material made to form a part of a surface or a complete surface. Generally, panels used for furniture are rectangular such that they have two opposing flat surface sides and four edge surfaces that are parallel in pairs. However, panels having other shapes are not excluded, such as for instance triangular panels. Also, panels having at least one bevelled edge each, usually at 45 degrees, such that two panels can form a miter joint is also considered in the context of the disclosure.

Also, the rod-shaped element could have an equally large cross-section area throughout the entire length with the recess having a corresponding shape. In a further possible embodiment, the rod-shaped element could have the shape of a truncated cone and the recess could have a shape that allows for a misalignment between the angles of the lateral sides of the rod-shaped element and the recess. Thus, the concept could be achieved with for instance a cylindrical rod-shaped element and a recess having a narrowing cross-section inwardly.

The tolerance for the angles when drilling/producing holes are generally well below 0,5 degrees in modern production facilities. One of the ideas with the present solution is to deliberately provide a misalignment of the angle of the recess in one panel and the angle of a rod-shaped element protruding from another panel when the two panels are to be connected using the rod-shaped element and the recess. For facilitating the understanding, the recess may be a cylindrical hole with an axis having a specific angle relative the surface where the opening of the hole is. The rod-shaped element may be cylinder-shaped, i.e., having a cylindrical cross section and also an axis in another angle relative the surface from which the rod-shaped element is protruding. Normally, the panel with the rod-shaped element is made by inserting a rod-shaped element into a hole drilled or made in some other way in a panel.

The deliberate misalignment of the recess and the rod-shaped element provides for a tighter fit between the two panels since pressing the panels together such that the surface of the first panel and the surface of the second panel come into full contact with each other will result in the rod-shaped element partially compressing the inside of the recess to plastic and/or elastic deformation and/or partially compressing the side of the rod-shaped element to plastic and/or elastic deformation inside the recess and/or bending the rod-shaped element plastically and/or elastically. The deformation/compression of either the recess and/or the rod-shaped element will provide for a stronger connection between the two panels than if the recess and rod-shaped element would have been normally aligned for a typical plug and socket connection.

According to a preferred aspect of the present disclosure the difference between the first angle and the second angle is between 1 and 2 degrees. For applications regarding panels used for furniture, this angle range has been shown to be advantageous.

According to another aspect of the present disclosure, the rod-shaped element is made of a material that is harder than at least the core of the second panel. Thus, the inside of the second panel is subjected to a somewhat greater compression/deformation as compared to the rod-shaped element.

According to an alternative aspect of the present disclosure, the second panel has a layer adjacent said surface that is harder than the material in the core of the panel. The recess opening is more likely not to be affected by the compression/deformation which is an advantage for the positioning of the two panels relative each other. Rather, the inside of the panel will be compressed/deformed before the opening of the recess will be compressed/deformed.

According to yet another aspect of the present disclosure wherein the rod-shaped element is made from one of or a combination of wood-based materials, polymers, and metals.

Further to materials, according to one aspect of the present disclosure, at least the core of the second panel is wood-based or plastic with or without fillers.

According to a further aspect of the present disclosure, the rod-shaped element is cylinder-shaped and the recess has a circular cross section. The diameter of the rod-shaped element is about 90% to 98% of the diameter of the recess, or more preferably 92% to 97% of the diameter of the recess, and most preferably 94% to 96% of the diameter of the recess.

According to yet a further aspect both the first and second angles are in the range of 30 to 60 degrees and more preferably 40 to 50 degrees. Traditionally when assembling furniture rod-shaped elements and corresponding recesses are made with vertical alignment, i.e., with 90 degrees angles. However, with the misalignment strategy it has shown to be advantageous to deviate from having a vertical alignment. Also, if two panels having each a bevelled edge at 45 degrees and the bevelled edges are to be connected to make a miter joint, the angles are also preferably deviating from a traditional vertical alignment, i.e., relative the contact surfaces of the panels.

According to yet another aspect of the present disclosure, the thickness of the second panel is larger than the diameter of a cylindrical rod-shaped element and smaller than three times the diameter of the cylindrical rod-shaped element.

According to an aspect of the present disclosure the first angle is smaller than the second angle. This facilitates slightly the assembly of the two panels. However, the locking principle still works with the reversed situation, i.e., the first angle being larger than the second angle.

According to another aspect of the present disclosure, the length of contact between the rod-shaped element and the recess on the side closest to the panel side with the recess is longer than the radius of a cylindrical rod-shaped element and shorter than two times the diameter of the rod-shaped element. If the contact length is too short there will be a minimum of the locking properties. If the contact length is too long, it may result in the tension or load on the rod-shaped element and/or the recess being higher than the strength and instead of a tight fit and a lock, the rod-shaped element and/or the panel with the recess might break. Also, a too long contact length may lead to that the two panels are not being able to be brought into contact with each other.

The recess has according to a further aspect of the present disclosure a countersink. This is particularly advantageous if the panel with the recess has a harder surface layer as compared to the core of the panel. Making the countersink corresponding to the thickness of the harder surface layer will make sure that the rod-shaped element will not affect the surface of the second panel. Also, the harder surface will not affect the rod-shaped element. Depending on the combination of materials in the panel versus the rod-shaped element, it may be that the rod-shaped element presses the edge of the recess and thus deforming the surface surrounding the recess if no countersink is present.

According to a further aspect of the present disclosure the first panel further comprises a second rod-shaped element extending at the same angle as said first rod-shaped element wherein the second rod-shaped element is shorter than said first rod-shaped element. Thus, the second rod-shaped element will not extend as far into its recess of the second panel as said first rod-shaped element. This allows for easier assembly/connection of the two panels. If, for instance, there are more than two rod-shaped elements for one connection, every other of the rod-shaped elements could be shorter.

In order to further secure the connection of the two panels, according to a further aspect of the present disclosure the connection arrangement further comprises a locking arrangement. The locking arrangement is arranged such that the rod-shaped element and recess do not detach and thus the two panels. For instance, a spring-loaded element extending at an angle different from the rod-shaped element could be arranged to snap into a recess when the two panels are in a final/desired position relative each other. A further alternative could be a simple screw or nail that is inserted such that movement of the rod-shaped element in an axial direction out of the recess is prevented.

According to a further aspect of the present disclosure a method is provided for connecting two panels to one another with an arrangement as previously disclosed. The method comprises placing the panel with the rod-shaped element such that the tip of the rod-shaped element is arranged at the recess of the second panel and such that the axis of the rod-shaped element is in line with the axis of the recess.

Also, bringing the panels together by inserting the rod-shaped element into the recess, and pressing the panels together such that the surface of the first panel and the surface of the second panel come into full contact with each other and a locked position by the rod-shaped element partially compressing the inside of the recess to plastic and/or elastic deformation and/or partially compressing the side of the rod-shaped element to plastic and/or elastic deformation inside the recess and/or bending the rod-shaped element plastically and/or elastically.

It should be emphasized that the term "comprises/comprising" when used in this specification is taken to specify the presence of stated features, integers, steps, or components but does not preclude the presence or addition of one or more other features, integers, steps, components, or groups thereof.

Further features of, and advantages with, the present invention will become apparent when studying the appended claims and the following description. The skilled person realize that different features of the present invention may be combined to create embodiments other than those described in the following, without departing from the scope of the present invention.

### Brief description of the drawings

These and other aspects, features and advantages of which embodiments of the invention are capable of will be apparent and elucidated from the following description of embodiments of the present invention, reference being made to the accompanying drawings, in which;
Figure 1 is a partial cross section of an embodiment according to the present disclosure,
Figure 2 is a partial side view of a further embodiment according to the present disclosure,
Figure 3 is a partial perspective of the embodiment shown in figure 2,
Figure 4 is a perspective view of an embodiment according to the present disclosure,
Figure 5 is a perspective view of an alternative recess according to the present disclosure,
Figure 6 is a sideview of an alternative embodiment of connection arrangement according to the present disclosure,
Figure 7 is a perspective view of two panels attached to each other with a connection arrangement of the present disclosure, and
Figure 8 is a partial enlargement of the arrangement shown in figure 7.

### Detailed description of example embodiments

Specific embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings and in the description, like numbers refer to like elements.

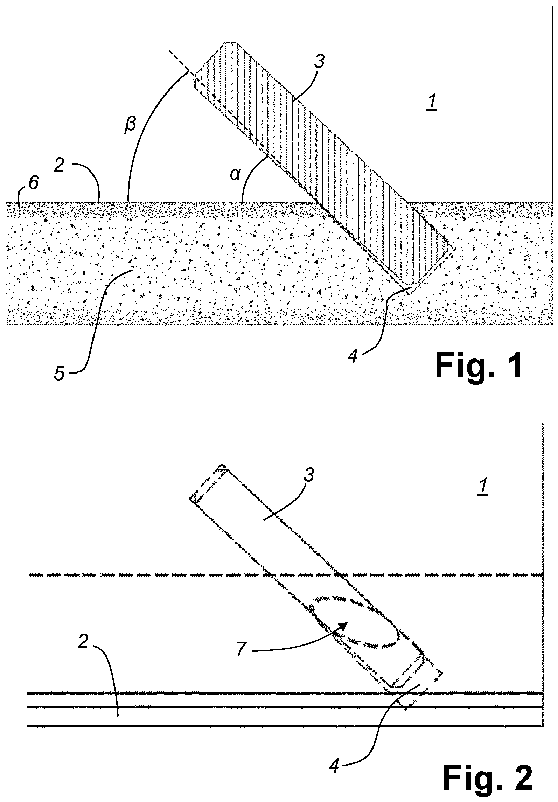

Figure 1 shows a mechanical connection arrangement for panels 1, 2, comprising a first panel 1, a second panel 2, and a mechanical locking device for locking the first panel 1 to the second panel 2. A surface of the first panel 1 and a surface of the second panel 2 are parallel and in contact in the locked position of the first and second panels 1, 2. The mechanical locking device comprises a rod-shaped element 3 at said surface of the first panel 1 and one corresponding insertion recess 4 at said surface of the second panel 2. The rod-shaped element 3 is inserted in the insertion recess 4. The rod-shaped element 3 extends at a first angle α from the surface of the first panel 1 and the insertion recess 4 extends into the second panel 2 at a second angle β from the surface of the second panel 2.

The difference between the first angle α and the second angle β is between 0,5 and 3 degrees and more preferably between 1 and 2 degrees. In the shown embodiment the first angle α is smaller than the second angle β.

Also illustrated in figure 1 is that the second panel 2 has a layer 6 adjacent said surface that is harder than the material in the core 5 of the panel. For instance, the second panel 2 could be of a wood-based material that is compressed on the top and bottom faces of the panel 2 such that the layer 6 closest to surface(s) has a higher density and thus harder.

Further, in the shown embodiment the rod-shaped element 3 is made of a material that is harder than the core 5 of the second panel 2. This is indicated by that the rod-shaped element 3 being unaffected, i.e., it still has a uniform diameter and is not bent. Also, in the recess 4 on the side closest to the surface the rod-shaped element 3 has been forced into the core of the panel such that the recess side is compressed. This is an effect of the misalignment or there being a difference in angles α, β.

In the shown embodiment the rod-shaped element 3 is cylinder-shaped and the recess 4 has a circular cross section. The diameter of the rod-shaped element 3 is about 90% to 98% of the diameter of the recess 4, or more preferably 92% to 97% of the diameter of the recess 4, and most preferably 94% to 96% of the diameter of the recess 4. An example of preferred diameters would be to have the rod-shaped element 3 with a diameter of 8 mm and the recess 4 with a diameter of 8,4 mm.

If the second panel 2 is made of wood-based material it is preferred if also the rod-shaped element 3 is made of a wood-based material. However, any combination could work, for instance, if the panel is wood-based or plastic with or without fillers, the rod-shaped element could be made from one of or a combination of wood-based materials, polymers, and metals.

Both the first and second angles α, β are in the range of 30 to 60 degrees and more preferably 40 to 50 degrees or about 45 degrees as in the shown embodiment.

The thickness of the second panel 2 is larger than the diameter of the rod-shaped element 3 and smaller than three times the diameter of the rod-shaped element 3. Also, the length of contact between the rod-shaped element 3 and the recess 4 on the side closest to the panel side with the recess 4 is longer than the radius of the rod-shaped element 3 and shorter than two times the diameter of the rod-shaped element 3.

Thus, when assembled, the panel 1 with the rod-shaped element 3 is placed such that the tip of the rod-shaped element 3 is arranged at the opening of the recess 4 of the second panel and such that the axis of the rod-shaped element 3 is aligned with the axis of the recess 4. Next, the panels 1, 2 are brought together by inserting the rod-shaped element 3 into the recess 4. Finally, the panels 1, 2 are pressed together such that the surface of the first panel 1 and the surface of the second panel 2 come into full contact with each other and a locked position by the rod-shaped element 3 partially compressing the inside of the recess 4. The compression results in plastic and/or elastic deformation and/or partially the side of the rod-shaped element 3 to plastic and/or elastic deformation inside the recess and/or bending the rod-shaped element 3 plastically and/or elastically. In the shown example, only the inside of the recess 4 is plastically and/or elastically deformed by the compression. Also, in the shown embodiment, since the outer layer 6 of the panel 2 is harder than the core 5 of the panel 2, the opening of the recess 4 functions as pivot point for the rod-shaped element, i.e., only the core 5 is affected by the misalignment between the axis of the rod-shaped element 3 and the axis of the recess 4 when the panels 1, 2 are pressed together into full contact with one another.

In figure 1, the panel 1 with the rod-shaped element 3 could be considered as a cuboid in the sense that the contact surface of panel 1 is an edge surface and the contact surface of panel 2 is a face surface.

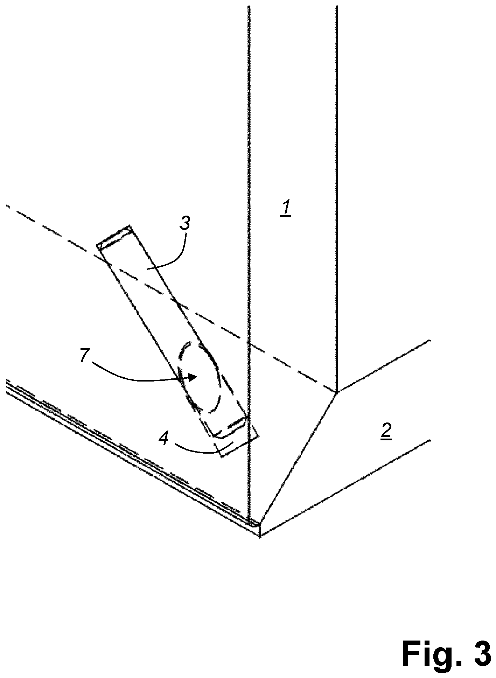

Turning to figures 2 -4, an alternative to the contact surfaces shown in figure 1 is shown. One edge on each panel 1, 2 has a bevelling and these bevelled edges are in contact with one another to form a miter joint. The figures show a mechanical connection arrangement for panels 1, 2, comprising a first panel 1, a second panel 2, and a mechanical locking device for locking the first panel 1 to the second panel 2. A surface of the first panel 1 and a surface of the second panel 2 are parallel and in contact in the locked position of the first and second panels 1, 2. The mechanical locking device comprises a rod-shaped element 3 at said surface of the first panel 1 and one corresponding insertion recess 4 at said surface of the second panel 2. The rod-shaped element 3 is inserted in the insertion recess 4. The rod-shaped element 3 extends at a first angle from the surface of the first panel 1 and the insertion recess 4 extends into the second panel 2 at a second angle from the surface of the second panel 2.

The difference between the first angle α and the second angle β is between 0,5 and 3 degrees and more preferably between 1 and 2 degrees. In the shown embodiment the first angle is smaller than the second angle.

In the shown embodiment of figures 2-4, the rod-shaped element 3 is cylinder-shaped and the recess 4 has a circular cross section. The diameter of the rod-shaped element 3 is about 90% to 98% of the diameter of the recess 4, or more preferably 92% to 97% of the diameter of the recess 4, and most preferably 94% to 96% of the diameter of the recess 4. An example of preferred diameters would be to have the rod-shaped element 3 with a diameter of 8 mm and the recess 4 with a diameter of 8,4 mm.

If the second panel 2 is made of wood-based material it is preferred if also the rod-shaped element 3 is made of a wood-based material. However, any combination could work, for instance, if the panel is wood-based or plastic with or without fillers, the rod-shaped element could be made from one of or a combination of wood-based materials, polymers, and metals.

Both the first and second angles are in the range of 30 to 60 degrees and more preferably 40 to 50 degrees.

The thickness of the second panel 2 is larger than the diameter of the rod-shaped element 3 and smaller than three times the diameter of the rod-shaped element 3. Also, the length of contact between the rod-shaped element 3 and the recess 4 on the side closest to the panel side with the recess 4 is longer than the radius of the rod-shaped element 3 and shorter than two times the diameter of the rod-shaped element 3.

Thus, when assembled, the panel 1 with the rod-shaped element 3 is placed such that the tip of the rod-shaped element 3 is arranged at the opening 7 of the recess 4 of the second panel and such that the axis of the rod-shaped element 3 is aligned with the axis of the recess 4. Next, the panels 1, 2 are brought together by inserting the rod-shaped element 3 into the recess 4. Finally, the panels 1, 2 are pressed together such that the surface of the first panel 1 and the surface of the second panel 2 come into full contact with each other and a locked position by the rod-shaped element 3 partially compressing the inside of the recess 4. The compression results in plastic and/or elastic deformation and/or partially the side of the rod-shaped element 3 to plastic and/or elastic deformation inside the recess and/or bending the rod-shaped element 3 plastically and/or elastically. In the shown example, only the inside of the recess 4 is plastically and/or elastically deformed by the compression.

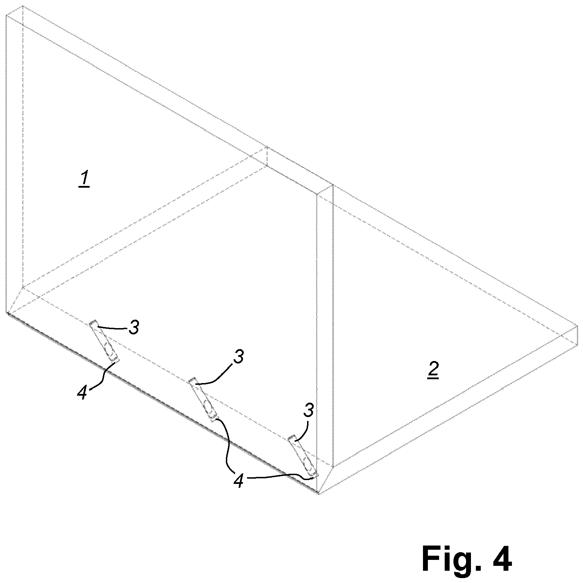

For having a more stabile connection between the two panels 1, 2, at least two mechanical locking devices should be arranged along the contact surface and preferably evenly distributed. In figure 4, three locking devices are shown.

The rod-shaped element 3 is generally pushed/pressed into a much tighter recess in the first panel 1 in a pre-assembly step. Generally, it is preferred that the rod-shaped element 3 extends longer into said panel compared to the length of the rod-shaped element 3 that extends into the recess 4 of the second panel 2. In other words, the part of the rod-shaped element 3 that is embedded in the recess 4 in an assembled state of the two panels 1, 2 is smaller than the part embedded in the first panel 1, lengthwise.

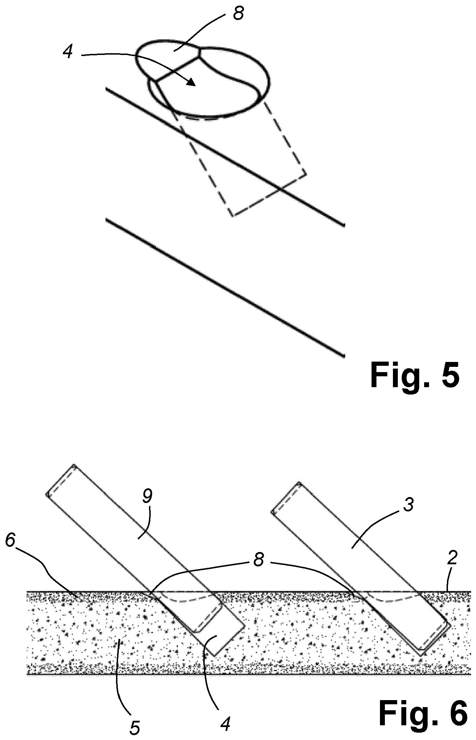

In figure 5, a recess 4 is shown with a countersink 8. This is particularly advantageous if the panel 2 with the recess 4 has a harder surface layer 6 as compared to the core 5 of the panel 2 as is indicated in figure 6. Making the countersink 8 corresponding to the thickness of the harder surface layer 6 will make sure that the rod-shaped element 3, 9 will not affect the surface of the second panel 2. Also, the harder surface will not affect the rod-shaped element 3, 9. Depending on the combination of materials in the panel 2 versus the rod-shaped element 3, 9, it may be that the rod-shaped element 3, 9 presses the edge of the recess and thus deforming the surface surrounding the recess 4 if no countersink 8 is present.

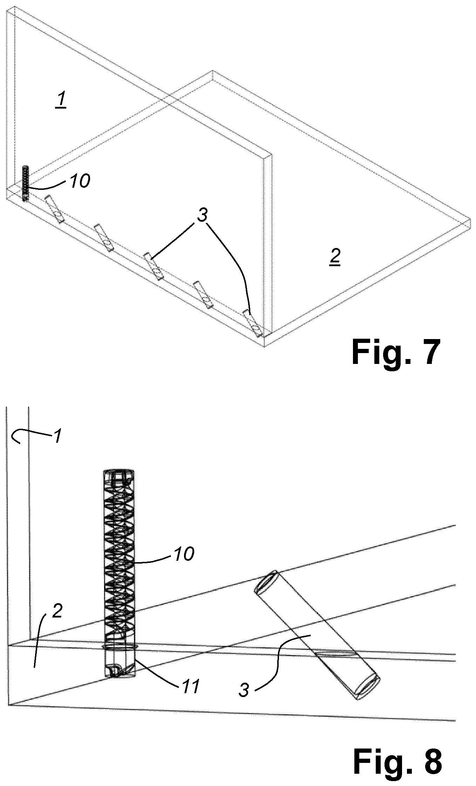

Also, in figure 6, the first panel further comprises another rod-shaped element 9 extending at the same angle as the first rod-shaped element 3. However, the second rod-shaped element 9 is shorter than the first rod-shaped element 3. The second rod-shaped element 9 will not extend as far into its recess 4 of the second panel 2 as the first rod-shaped element 3. This allows for easier assembly/connection of the two panels. When assembling/ connecting the two panels, the first rod-shaped element 3 is first inserted into its recess and only when the connection is coming close to being completed the second rod-shaped element 9 enters its recess 4 and a final pressing of the first panel towards the second panel 2 can be made using a smaller force as compared to if the two rod-shaped elements would have been equally long. Preferably, the longer of the rod-shaped elements is arranged to be positioned the closest to a corner of the two panels being connected. For instance, in figure 7, if one of the rod-shaped elements only is the longer one it should be the one farthest to the right in the figure. The longer rod-shaped elements form a stronger connection between two panels since the contact surface between the rod-shaped element and the recess is larger, and due to the misalignment, also provide for higher friction as a result of the larger compression.

In order to further secure the connection of the two panels 1, 2, the connection arrangement further comprises a locking arrangement 10, 11. The locking arrangement is arranged such that the rod-shaped element 3, 9 and the recess 4 do not detach and thus the two panels 1, 2. In figures 7 and 8 is shown how a spring-loaded element 10 extends at an angle different from the rod-shaped elements 3, 9 and is arranged to snap into a recess 11 when the two panels 1, 2 are in a final/desired position relative each other.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

While several embodiments of the present invention have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present invention. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

The indefinite articles "a" and "an," as used herein in the specification and in the claims, unless clearly indicated to the contrary, should be understood to mean "at least one."

## Claims

1. A mechanical connection arrangement for panels (1, 2), comprising a first panel (1), a second panel (2) and a mechanical locking device for locking the first panel (1) to the second panel (2), wherein a surface of the first panel (1) and a surface of the second panel (2) are parallel and in contact in a locked position of the first and second panels (1, 2), the mechanical locking device comprising at least one rod-shaped element (3) at said surface of the first panel (1) and at least one corresponding insertion recess (4) at said surface of the second panel (2), wherein the rod-shaped element (3) is configured to be inserted in the insertion recess (4), the lateral surface of the rod-shaped element (3) extends at a first angle (α) from the surface of the first panel (1), the lateral surface of the insertion recess (4) extends into the second panel (2) at a second angle (β) from the surface of the second panel (2),
**characterized in**
**that** the difference between the first angle (α) and the second angle (β) is between 0,5 and 3 degrees.

2. The arrangement according to claim 1, wherein the difference between the first angle (α) and the second angle (β) is between 1 and 2 degrees.

3. The arrangement according to any of the preceding claims, wherein the rod-shaped element (3) is made of a material that is harder than at least the core (5) of the second panel (2).

4. The arrangement according to any of the preceding claims, wherein the second panel (2) has a layer (6) adjacent said surface that is harder than the material in the core (5) of the panel.

5. The arrangement according to any of the preceding claims, wherein the rod-shaped element (3) is made from one of or a combination of wood-based materials, polymers, and metals.

6. The arrangement according to any of the preceding claims, wherein at least the core (5) of the second panel (2) is wood-based or plastic with or without fillers.

7. The arrangement according to any of the preceding claims, wherein the rod-shaped element (3) is cylinder-shaped and the recess (4) has a circular cross section, the diameter of the rod-shaped element (3) being about 90% to 98% of the diameter of the recess (4), or more preferably 92% to 97% of the diameter of the recess (4), and most preferably 94% to 96% of the diameter of the recess (4).

8. The arrangement according to any of the preceding claims, wherein both the first and second angles (α, β) are in the range of 30 to 60 degrees and more preferably 40 to 50 degrees.

9. The arrangement according to any of the preceding claims, wherein the thickness of the second panel (2) is larger than the diameter of a cylindrical rod-shaped element (3) and smaller than three times the diameter of the cylindrical rod-shaped element (3).

10. The arrangement according to any of the preceding claims, wherein the first angle (α) is smaller than the second angle (β).

11. The arrangement according to any of the preceding claims, wherein the length of contact between the rod-shaped element (3) and the recess (4) on the side closest to the panel side with the recess (4) is longer than the radius of a cylindrical rod-shaped element (3) and shorter than two times the diameter of the rod-shaped element (3).

12. The arrangement according to any of the preceding claims, wherein the recess (4) has a countersink (8).

13. The arrangement according to any of the preceding claims, wherein the first panel further comprises a second rod-shaped element (9) extending at the same angle as said first rod-shaped element (3), the second rod-shaped element (9) being shorter than said first rod-shaped element (3).

14. The arrangement according to any of the preceding claims, further comprising a locking arrangement (10, 11).

15. A method for connecting two panels (1, 2) to one another with an arrangement according to any of the preceding claims comprising:
placing the panel (1) with the rod-shaped element (3) such that the tip of the rod-shaped element (3) is arranged at the opening (7) of the recess (4) of the second panel and such that the axis of the rod-shaped element (3) is aligned with the axis of the recess (4),
bringing the panels (1, 2) together by inserting the rod-shaped element (3) into the recess (4),
pressing the panels (1, 2) together such that the surface of the first panel (1) and the surface of the second panel (2) come into full contact with each other and a locked position by the rod-shaped element (3) partially compressing the inside of the recess (4) to plastic and/or elastic deformation and/or partially compressing the side of the rod-shaped element (3) to plastic and/or elastic deformation inside the recess and/or bending the rod-shaped element (3) plastically and/or elastically.
